(19)

Europäisches
Patentamt
European
Patent Office
Office européen
des brevets

(11) **EP 2 727 645 A1**

(12) **EUROPEAN PATENT APPLICATION**
published in accordance with Art. 153(4) EPC

(43) Date of publication:
**07.05.2014 Bulletin 2014/19**

(51) Int Cl.:
**B01D 65/06** [(2006.01)]      **B01D 65/02** [(2006.01)]
**C02F 1/44** [(2006.01)]      **C02F 1/52** [(2006.01)]

(21) Application number: **12804088.8**

(22) Date of filing: **09.05.2012**

(86) International application number:
**PCT/JP2012/061850**

(87) International publication number:
**WO 2013/001914 (03.01.2013 Gazette 2013/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2011  JP 2011143851**

(71) Applicant: **Toray Industries, Inc.
Tokyo, 103-8666 (JP)**

(72) Inventor: **IKEDA, Keiichi
Otsu-shi, Shiga 520-8558 (JP)**

(74) Representative: **Hager, Thomas Johannes
Hoefer & Partner
Patentanwälte
Pilgersheimer Strasse 20
81543 München (DE)**

(54)   **WASHING METHOD FOR SEPARATION MEMBRANE MODULE**

(57)    In a method for cleaning a separation membrane module in which filtration is performed through a separation membrane after mixing and stirring raw water containing particles having hardness higher than that of the separation membrane with an inorganic flocculant, in order to efficiently reduce the abrasion of the membrane surfaces by the particles having higher hardness during air scrubbing and to suppress the cake filtration resistance derived from the flocculation flocks containing the particles having high hardness on the membrane surfaces at the time of successively performing a filtration step, thereby enabling stable operation at a low transmembrane pressure over a long period of time, (a) water on a membrane primary side in the separation membrane module is discharged outside the system after completion of the filtration; then (b) the membrane primary side in the separation membrane module is filled with water containing a chelating agent for a certain period of time; subsequently (c) the water containing the chelating agent on the membrane primary side in the separation membrane module is discharged outside the system; and then (d) backwashing discharge water in the separation membrane module is discharged while performing backwashing in which backwashing water is transferred from a membrane secondary side to the membrane primary side of the separation membrane module.

*Fig. 1*

EP 2 727 645 A1

**Description**

TECHNICAL FIELD

The present invention relates to a method for cleaning a microfiltration membrane module or an ultrafiltration membrane module to be used for performing membrane filtration after mixing and stirring raw water containing particles having hardness higher than that of the separation membrane with an inorganic flocculant.

BACKGROUND ART

Since a membrane separation method has characteristic features such as energy saving, space saving, and an improvement in filtrate quality, use of the method is continued to spread in various fields. For example, there may be mentioned an application of a microfiltration membrane and an ultrafiltration membrane to a water treatment process of producing industrial water or tap water from river water, groundwater, and water obtained by sewage treatment and to a pretreatment in a reverse osmosis membrane treatment process for seawater desalination. Furthermore, in the course of membrane treatment thereof, active carbon may be sometimes added to raw water or the like for the purpose of removing soluble organic matters (Patent Document 1).

When the membrane filtration of raw water is continued, amounts of humic substances, proteins derived from microorganisms, and the like deposited on the surfaces of the membranes and in the membrane pores increases with an increase in an amount of filtrate, whereby a drop in filtrate flow rate or a rise in transmembrane pressure has become a problem.

Under these circumstances, physical cleaning methods such as an air scrubbing of vibrating membranes with air bubbles introduced to the membrane primary side (raw water side) and bringing the membranes into contact with one another, thereby scraping off the substances attached to the membrane surfaces, and a backwashing of flowing under pressure a membrane filtrate or clarified water from the membrane secondary side (filtrate side) to the membrane primary side in a direction reverse to the filtration through the membrane and removing the contaminants attached to the membrane surfaces and in membrane pores, have been put to practical use (Patent Documents 2, 3, and 4).

For the purpose of further enhancing cleaning effect, for example, a method of adding sodium hypochlorite to backwashing water and a method of using an ozone-containing water as backwashing water have been proposed (Patent Documents 5 and 6). The oxidizing agents have an effect of decomposing and removing organic matters, such as humic substances and proteins derived from microorganisms, having been attached on the membrane surfaces and in the membrane pores.

In addition, at the backwashing, a method of once discharging water on the membrane primary side in the separation membrane module and performing backwashing with discharging backwashing discharge water has been proposed (Patent Document 7).

However, in the case of membrane filtration of raw water containing particles having high hardness, particularly particles harder than the separation membrane, such as powdered activated carbon or the like, there is a problem that the particles having high hardness exfoliated from the membrane surface collide with the membrane surface and thus abrade it by performing the air scrubbing, whereby filtration performance is degraded. Moreover, in the case where only the backwashing is performed without performing the air scrubbing, the particles having high hardness are not sufficiently exfoliated from the membrane surface and a large amount thereof are accumulated, so that there is a problem that cake filtration resistance derived from the particles having high hardness (filtration resistance based on the Ruth's filtration expression described in Non-Patent Document 1, which is expressed by Rc = $\alpha$c (cake average filtration specific resistance) $\times$ Wc (cake deposition quantity per unit membrane area)) increases and transmembrane pressure steeply increases. Furthermore, even when sodium hypochlorite is added to the backwashing water or the ozone-containing water is used as the backwashing water, there is a problem that the chemicals are consumed by the powdered activated carbon and hence an effect of decomposing and removing the membrane-attached organic matters is decreased.

BACKGROUND ART DOCUMENT

PATENT DOCUMENT

Patent Document 1: JP-A-10-309567

Patent Document 2: JP-A-11-342320

Patent Document 3: JP-A-2000-140585

Patent Documents 4: JP-A-2007-289940

Patent Document 5: JP-A-2001-187324

Patent Document 6: JP-A-2001-79366

Patent Document 7: JP-A-6-170364

NON-PATENT DOCUMENT

Non-Patent Document 1: "Yuhzah notameno Jitsuyou Makubunri Gijutsu (Practical Membrane Separation Technology for Users)", The Nikkan Kogyo Shimbun, Ltd., April, 1996, p. 85

SUMMARY OF THE INVENTION

PROBLEMS THAT THE INVENTION IS TO SOLVE

Under these circumstances, the applicant of the present application devised a method for cleaning a separation membrane module in which, after the completion of filtration, backwashing discharge water in a separation membrane module is discharged while performing backwashing after water on the membrane primary side in the separation membrane module is discharged outside the system, subsequently the membrane primary side in the separation membrane module is filled with water and air scrubbing is performed, and then the water on the membrane primary side in the separation membrane module is discharged outside the system.

However, in the case where membrane filtration is performed after powdered activated carbon and an inorganic flocculant are added to raw water and then the whole is mixed and stirred for the purpose of adsorbing and removing low-molecular-weight organic matters having a fractional molecular weight of 1,500 Da or less by powdered activated carbon and simultaneously removing high-molecular-weight organic matters having a fractional molecular weight of more than 1,500 Da by a flocculation treatment through the inorganic flocculant injection, when the above cleaning method is performed, the following problems have arisen even when backwashing discharge water in the separation membrane module is discharged while performing backwashing after the water on the membrane primary side in the separation membrane module is discharged outside the system. That is, in the case where the inorganic flocculant is injected in a large amount, flocculation flocks containing the powdered activated carbon are not sufficiently exfoliated from membrane surfaces. Moreover, since a part of the exfoliated flocculation flocks also have a large particle diameter, they are prone to remain at void parts on the membrane primary side in the separation membrane module, so that they are difficultly discharged outside the system. Therefore, the flocculation flocks containing the powdered activated carbon exfoliated from the membrane surfaces collide with the membrane surfaces during subsequent air scrubbing, thereby abrading the surfaces, so that there is a problem of deterioration in filtration performance.

Even when flux of the backwashing is increased or backwashing time is extended for the purpose of solving these problems, the cleaning effect is small and there is a problem that water recovery ratio drops. Moreover, in the case where the air flow rate for the air scrubbing is diminished or the air scrubbing time is decreased, the abrasion of the membrane surfaces can be suppressed but the powdered activated carbon is not sufficiently exfoliated from the membrane surfaces and is accumulated in a large amount. Therefore, there are problems that the cake filtration resistance derived from the flocculation flocks containing the powdered activated carbon increases and the transmembrane pressure rapidly rises.

An object of the present invention is to enable stable operation under a low transmembrane pressure over a long period of time through effective reduction of the abrasion of the membrane surfaces by the particles having high hardness during the air scrubbing and, in the case where a filtration step is successively preformed, through suppression of the cake filtration resistance derived from the flocculation flocks containing the particles having high hardness on the membrane surfaces, by making the flocculation flocks containing the particles having high hardness easy to foliate and making the exfoliated flocculation flocks easy to be discharged outside the system, in the case where backwashing discharge water in the separation membrane module is discharged while performing backwashing, in a method for cleaning a separation membrane module in which raw water containing particles having hardness higher than that of the separation membrane is mixed and stirred with an inorganic flocculant and then filtration is performed through the separation membrane.

MEANS FOR SOLVING THE PROBLEMS

For the purpose of solving the above problems, the method for cleaning a separation membrane module of the invention has any of the following characteristic features.

(1) A method for cleaning a separation membrane module in which filtration is performed through a separation membrane after mixing and stirring raw water containing particles having hardness higher than that of the separation membrane with an inorganic flocculant, the method including:

(a) discharging water on a membrane primary side in the separation membrane module outside the system after completion of the filtration;

then (b) filling the membrane primary side in the separation membrane module with water containing a chelating agent for a certain period of time;

subsequently (c) discharging the water containing the chelating agent on the membrane primary side in the separation membrane module outside the system; and

then (d) discharging backwashing discharge water in the separation membrane module while performing backwashing in which backwashing water is transferred from a membrane secondary side to the membrane primary side of the separation membrane module.

(2) A method for cleaning a separation membrane module in which filtration is performed through a separation membrane after mixing and stirring raw water containing particles having hardness higher than that of the separation membrane with an inorganic flocculant, the method including:

(e) injecting a chelating agent to a membrane primary side in the separation membrane module in the course of the filtration;

subsequently (f) discharging water containing the chelating agent in the separation membrane module outside the system after completion of the filtration; and

then (d) discharging backwashing discharge water in the separation membrane module while performing backwashing in which backwashing water is transferred from a membrane secondary side to the membrane primary side of the separation membrane module.

(3) A method for cleaning a separation membrane module in which filtration is performed through a separation membrane after mixing and stirring raw water containing particles having hardness higher than that of the separation membrane with an inorganic flocculant, the method including:

(a) discharging water on a membrane primary side in the separation membrane module outside the system after completion of the filtration; and

then (g) discharging backwashing discharge water in the separation membrane module while performing backwashing in which water containing a chelating agent is transferred from a membrane secondary side to the membrane primary side of the separation membrane module.

(4) The method for cleaning a separation membrane module according to any of (1) to (3), in which, following any of the steps (d) and (g), (h) air scrubbing is performed while water is fed to the membrane primary side in the separation membrane module or after the membrane primary side in the separation membrane module is filled with water.

(5) The method for cleaning a separation membrane module according to (4), in which (i) the water on the membrane primary side in the separation membrane module is discharged outside the system after performing the air scrubbing.

(6) The method for cleaning a separation membrane module according to (4) or (5), in which the water to be fed to the membrane primary side in the separation membrane module in the step (h) is at least one of the backwashing water, the raw water and flocculation water obtained by mixing and stirring the raw water and the inorganic flocculant.

(7) The method for cleaning a separation membrane module according to any of (1) to (6), in which pH of the water containing the chelating agent in any of steps (b), (e) and (g) is 5 or more.

(8) The method for cleaning a separation membrane module according to any of (1) to (7), in which the water on the membrane primary side in the separation membrane module is discharged outside the system until a water level on the membrane primary side in the separation membrane module reaches one third or less of a length of the separation membrane, in at least one step of the steps (a), (c) and (f).

(9) The method for cleaning a separation membrane module according to (8), in which a whole quantity of the water on the membrane primary side in the separation membrane module is discharged in at least one step of the steps (a), (c) and (f).

(10) The method for cleaning a separation membrane module according to any of (1) to (9), in which a flow rate of the backwashing is controlled so that a water level on the membrane primary side in the separation membrane module is kept to be one third or less of a length of the separation membrane, in any of the steps (d) and (g).

ADVANTAGE OF THE INVENTION

According to the method for cleaning a separation membrane module of the invention, in a method for cleaning a separation membrane module in which raw water containing particles having hardness higher than that of the separation membrane is mixed and stirred with an inorganic flocculant and then filtration is performed through the separation membrane, a chelating agent forms a chelate complex with the inorganic flocculant. Therefore, even when flux for backwashing is not increased or the water quantity for backwashing is not increased by extending the backwashing time, the flocculation flocks are easily exfoliated from the membrane surfaces during the backwashing and also the flocculation flocks tend to be broken. As a result, the exfoliated flocculation flocks are easily discharged outside the system without remaining in void parts of the membrane primary side in the separation membrane module and also the abrasion of the membrane surfaces by the particles having higher hardness during air scrubbing can be efficiently reduced. Furthermore, at the time of successively performing a filtration step, the cake filtration resistance derived from the flocculation flocks containing the particles having high hardness on the membrane surfaces is suppressed and hence stable operation at a low transmembrane pressure over a long period of time is enabled.

BRIEF DESCRIPTION OF THE DRAWINGS

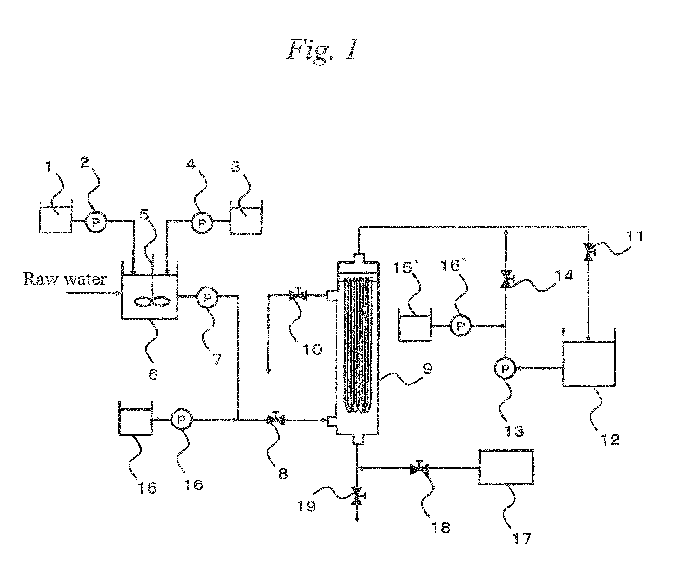

[Fig. 1] Fig. 1 is an apparatus schematic flow chart showing one example of an apparatus for treating water to which the method for cleaning the invention is applied.

MODE FOR CARRYING OUT THE INVENTION

The following will describe the invention in further detail based on the embodiment shown in the drawing. However, the invention should not be construed as being limited to the following embodiments.

The apparatus for treating water in which the method for cleaning a separation membrane module of the invention is performed includes, for example, as shown in Fig. 1, an active carbon slurry storing tank 1 for storing a powdered activated carbon slurry, a slurry feed pump 2 for feeding the powdered activated carbon slurry to raw water, a flocculant storing tank 3 for storing an inorganic flocculant, a flocculant feed pump 4 for feeding the inorganic flocculant to the raw water, a stirrer 5 for mixing and stirring the raw water with the powdered activated carbon and the inorganic flocculant, a flocculation reaction tank 6, a flocculation water feed pump 7 for feeding flocculation water, a flocculation water feed valve 8 which is opened at the time of feeding the flocculation water, a microfiltration membrane/ultrafiltration membrane module 9 for membrane filtration of the flocculation water, an air bent valve 10 which is opened in the case of performing backwashing or air scrubbing, a filtrate valve 11 which is opened at the time of membrane filtration, a filtrate storing tank 12 for storing membrane filtrate obtained by the microfiltration membrane/ultrafiltration membrane module 9, a backwashing pump 13 which is brought into operation at the time of backwashing with feeding the membrane filtrate to the microfiltration membrane/ultrafiltration membrane module 9, a backwashing valve 14 which is opened at the time of backwashing, chelating agent storing tanks 15, 15' for storing a chelating agent, chelating agent feed pumps 16, 16' for feeding the chelating agent to the membrane primary side in the microfiltration membrane/ultrafiltration membrane module 9, an air blower 17 which is an air feed source for air scrubbing of the microfiltration membrane/ultrafiltration membrane module 9, an air scrubbing valve 18 which is opened in the case of feeding air to a lower part of the micro filtration membrane/ultrafiltration membrane module 9 to perform the air scrubbing, and a discharging valve 19 which is opened in the case of discharging water on the membrane primary side of the microfiltration membrane/ultrafiltration membrane module 9. Incidentally, to the flocculation water feed pump 7, not the flocculation water but raw water itself may be fed and, simultaneously therewith, the flocculation water feed valve 8 is opened at the time of feeding the raw water.

In the above-described apparatus for treating water, the powdered activated carbon stored in the active carbon slurry storing tank 1 is fed to the flocculation reaction tank 6 by the slurry feed pump 2 at the time of the filtration step. Also, the inorganic flocculant stored in the flocculant storing tank 3 is fed to the flocculation reaction tank 6 by the flocculant feed pump 4. The raw water mixed and stirred with the powdered activated carbon and the inorganic flocculant by the stirrer 5 is fed to the membrane primary side of the microfiltration membrane/ultrafiltration membrane module 9 by bringing the flocculation water feed pump 7 into operation and opening the flocculation water feed valve 8. Further, by opening the filtrate valve 11, the pressurized filtration through the microfiltration membrane/ultrafiltration membrane module 9 is performed. The filtrate is transferred from the membrane secondary side to the filtrate storing tank 12 via the filtrate valve 11. In the case of whole amount filtration, the air vent valve 10, the backwashing valve 14, the air scrubbing valve 18, and the discharging valve 19 are all closed. The filtration time is preferably set as appropriate depending on raw water purity, membrane permeation flux, and the like but the filtration time may be continued until predetermined transmembrane pressure or filtrate quantity [$m^3$] is attained in the case of constant flow filtration or until predetermined filtration flow rate [$m^3/hr$] or filtrate quantity [$m^3$] is attained in the case of constant pressure filtration. Here, the filtration flow means filtrate quantity per unit time.

In the apparatus for treating water as described above, the cleaning method of the invention is, for example, performed as follows.

First, the flocculation water feed valve 8 and the filtrate valve 11 are closed and the flocculation water feed pump 7 is halted, whereby the filtration step of the microfiltration membrane/ultrafiltration membrane module 9 is halted. Thereafter, in order to discharge the powdered activated carbon attached to a hollow fiber membrane, the microfiltration membrane/ultrafiltration membrane module 9 is cleaned. At this time, the air bent valve 10 and the discharging valve 19 of the microfiltration membrane/ultrafiltration membrane module 9 are first opened. When water on the membrane primary side in the microfiltration membrane/ultrafiltration membrane module 9 is discharged outside the system of the microfiltration membrane/ultrafiltration membrane module 9 from the discharging valve 19 provided at a lower part of the microfiltration membrane/ultrafiltration membrane module 9, the water level in the microfiltration membrane/ultrafiltration membrane module 9 is lowered, which results in a state that the membrane primary side is surrounded with a gas. Here, the membrane primary side is referred to a side at which raw water to be a filtration object is fed and the membrane secondary side is referred to a side at which filtrate obtained by filtration of the raw water through the membrane is present. Thus, it is preferable to discharge the water on the membrane primary side in the microfiltration membrane/ultrafiltration membrane module 9 until the water level on the membrane primary side in the separation membrane module 9 reaches one third or less of the length of the separation membrane and it is further preferable to discharge the whole quantity of the water (step a).

Next, the membrane primary side in the microfiltration membrane/ultrafiltration membrane module 9 is filled with water containing a chelating agent for a certain period of time. As the method, after the discharging valve 19 is first closed, the flocculation water feed valve 8 is opened and the chelating agent feed pump 16 is brought into operation, whereby the chelating agent in the chelating agent storing tank 15 may be directly fed to the membrane primary side in the microfiltration membrane/ultrafiltration membrane module 9. Alternatively, after the discharging valve 19 is first closed, the backwashing valve 14 is opened and the chelating agent feed pump 16' is brought into operation, whereby the chelating agent in the chelating agent storing tank 15' may be fed to the membrane primary side from the membrane secondary side. After the membrane primary side in the microfiltration membrane/ultrafiltration membrane module 9 is filled with the water containing the chelating agent, the flocculation water feed valve 8 is closed and the chelating agent feed pump 16 is halted or the backwashing valve 14 is closed and the chelating agent feed pump 16' is halted, followed by settling (step b). The settling time may be a time sufficient for formation of a chelate complex from the chelating agent with the inorganic flocculant accumulated on the membrane primary side in the microfiltration membrane/ultrafiltration membrane module 9, and is preferably 1 minute or more. However, since the inorganic flocculant is accumulated only on the membrane primary side, it is not necessary to permeate the chelating agent to the membrane secondary side. Also, in order to prevent the contamination of the pipe inside on the membrane secondary side with aluminum and iron derived from the inorganic flocculant, it is preferable not to permeate the chelating agent to the membrane secondary side. Therefore, it is preferable to control the settling time as appropriate in consideration of these matters. Moreover, since the chelating agent is prone to form a chelate complex with the inorganic flocculant and the settling time can be shortened or the concentration of the chelating agent can be reduced, pH of the water containing the chelating agent on the membrane primary side in the microfiltration membrane/ultrafiltration membrane module 9 is preferably adjusted to 5 or more and is further preferably adjusted to 7 or more using an alkali such as sodium hydroxide.

In the aforementioned embodiment, after the filtration step in the microfiltration membrane/ultrafiltration membrane module 9 is stopped, the membrane primary side in the microfiltration membrane/ultrafiltration membrane module 9 is filled with water containing a chelating agent for a certain period of time after the water on the membrane primary side in the microfiltration membrane/ultrafiltration membrane module 9 is discharged outside the system. However, the membrane primary side in the microfiltration membrane/ultrafiltration membrane module 9 may be filled with water containing a chelating agent for a certain period of time by injecting a chelating agent to the membrane primary side in the microfiltration membrane/ultrafiltration membrane module 9 along the way of the filtration with bringing the chelating agent feed pump 16 into operation (step e) and optionally by settling for a certain period of time after the completion of filtration. This case has merits that the aforementioned step a in which the water on the membrane primary side in the microfiltration membrane/ultrafiltration membrane module 9 is discharged outside the system can be omitted and the water recovery ratio (filtrate quantity/raw water quantity) is improved. However, there is a possibility that a part of the chelating agent may pass through membrane pores to flow into the filtrate storing tank 12, so that a pH meter or an oxidation reduction potentiometer is provided in the pipe on the membrane secondary side at which the microfiltration membrane/ultrafiltration membrane module 9 and the filtrate storing tank 12 are communicated and the filtration step may be stopped just after the pH or the oxidation reduction potential varies.

Subsequently, the discharging valve 19 is opened in a state that the air bent valve 10 of the microfiltration membrane/ultrafiltration membrane module 9 is opened. When the water containing the chelating agent on the membrane primary side in the microfiltration membrane/ultrafiltration membrane module 9 is discharged outside the system of the membrane module from the discharging valve 19 at the lower part of the microfiltration membrane/ultrafiltration membrane module 9, the water level of the microfiltration membrane/ultrafiltration membrane module 9 is lowered, which results in a state that the membrane primary side is surrounded with a gas. The water containing the chelating agent on the membrane primary side in the microfiltration membrane/ultrafiltration membrane module 9 may remain but at least a half of the membrane is made upper than the water surface and is brought into contact with a gas. The water containing the chelating agent is discharged preferably until the water level reaches one third or less of the separation membrane length in the perpendicular direction and more preferably, the whole quantity of the water on the membrane primary side is discharged (i.e., the whole membrane is made upper than the water surface so that the whole membrane comes into contact with a gas) (steps c and f).

Thereafter, backwashing using the membrane filtrate in the filtrate storing tank 12 is performed by opening the backwashing valve 14 with still opening the air bent valve 10 and the discharging valve 19 and bringing the backwashing pump 13 into operation (step d). On this occasion, the backwashing discharge water in the microfiltration membrane/ultrafiltration membrane module 9 is discharged. The conventional backwashing has been performed in a state that the membrane primary side in the microfiltration membrane/ultrafiltration membrane module 9 is filled with water and the backwashing discharge water has been discharged outside the system through the air bent valve 10, so that the water pressure has inhibited the exfoliation of the flocculation flocks containing the powdered activated carbon from the membrane surfaces. Also, the flocculation flocks exfoliated from the membrane surfaces have been prone to remain at the void parts of the membrane primary side in the microfiltration membrane/ultrafiltration membrane module 9 owing to the large particle diameter thereof and thus have been difficultly discharged outside the system from the lower part of the microfiltration membrane/ultrafiltration membrane module 9 via the discharging valve 19. On the other hand, in the aforementioned present invention, by filling the membrane primary side in the microfiltration membrane/ultrafiltration membrane module 9 with water containing the chelating agent for a certain period of time before backwashing, the metal ion as a component of the inorganic flocculant form a chelate complex with the chelating agent and the flocculation flocks are destroyed. As a result, the resistance caused by the water pressure at the time of backwashing disappears, so that the powdered activated carbon and the chelate complex are easily exfoliated from the membrane surfaces. Also, the exfoliated powdered activated carbon and chelate complex are directly discharged outside the system from the lower part of the microfiltration membrane/ultrafiltration membrane module 9 via the discharging valve 19 with falling in drops on the membrane surfaces without remaining at the void parts of the membrane primary side in the microfiltration membrane/ultrafiltration membrane module 9.

At the time of backwashing, it is more preferable to bring the chelating agent feed pump 16' into operation and incorporate the chelating agent into the backwashing water since the powdered activated carbon and the chelate complex are easily exfoliated from the membrane surfaces.

At the time of performing backwashing while discharging the backwashing discharge water in the microfiltration membrane/ultrafiltration membrane module 9, an effect of exfoliating the powdered activated carbon from the membrane surfaces is improved in the case where water pressure is not imparted to the membrane primary side continuously during the backwashing. Therefore, it is preferable to control the flow rate for backwashing, i.e., backwashing flow rate [m$^3$/hr] so that the water level on the membrane primary side in the microfiltration membrane/ultrafiltration membrane module 9 is kept to be one third or less of the length of the separation membrane. Although the effect of exfoliating the powdered activated carbon from the membrane surfaces is improved when the backwashing flow rate is increased, the discharge water flow rate discharged from the lower part of the microfiltration membrane/ultrafiltration membrane module 9 by the own weight is restricted depending on the size of the discharge water outlet of the microfiltration membrane/ultrafiltration membrane module 9 and hence the water level of the membrane primary side is elevated and water pressure is imparted to the membrane primary side in some cases. Accordingly, it is preferable to control the backwashing flow rate as appropriate according to the structure of the microfiltration membrane/ultrafiltration membrane module 9. The backwashing may be performed continuously or may be performed intermittently. Moreover, in the aforementioned embodiment, after the step a, (I) the discharging valve 19 is closed, the flocculation water feed valve 8 is opened, the chelating agent feed pump 16 is brought into operation, and thus the chelating agent in the chelating agent storing tank 15 is directly fed to the membrane primary side in the microfiltration membrane/ultrafiltration membrane module 9, or the discharging valve 19 is closed, the backwashing valve 14 is opened, the chelating agent feed pump 16' is brought into operation, and thus the chelating agent in the chelating agent storing tank 15' is fed to the membrane primary side from the membrane secondary side, whereby the membrane primary side in the microfiltration membrane/ultrafiltration membrane module 9 is filled with water containing a chelating agent and (II) thereafter, the flocculation water feed valve 8 is closed and the chelating agent feed pump 16 is halted or the backwashing valve 14 is closed and the chelating agent feed pump 16' is halted, followed by settling (step b). However, after the step a, by opening the backwashing valve 14 and bringing the chelating agent feed pump 16' into operation in a state that the discharging valve 19 is still opened, the backwashing discharge water in the separation membrane module may be discharged while performing backwashing in which the water containing the chelating agent in the chelating agent storing tank 15' is transferred from the membrane secondary side to the membrane primary side of the separation membrane module (step g). In this case, the step g acts as an alternative step of the steps b to d, there is a merit that the cleaning step can be simplified. However, for bringing the membrane primary side into contact with the chelating agent, it is necessary to lengthen the backwashing time and there is a possibility that a large amount of the chelating agent is used, so that the backwashing flow rate [m$^3$/hr] is appropriately set. In the step g, the chelating agent feed pump 16' may be operated in the first half and the backwashing pump 13 may be operated in the second half.

After the step d or the step g, by closing the discharging valve 19 and filling the membrane primary side in the microfiltration membrane/ultrafiltration membrane module 9 with water, a gas is fed from a lower part of the microfiltration membrane/ultrafiltration membrane module 9 and air scrubbing can be performed by opening the air scrubbing valve 18 and bringing the air blower 17 into operation (step h). The step h is effective for exfoliating the powdered activated carbon which has not been exfoliated from the membrane surfaces of the microfiltration membrane/ultrafiltration membrane module 9 even in the step d or the step g. The step h may be performed every time after the step d or the step g or may be performed at times. However, in the case where the injected amount of the powdered activated carbon is large or the amount of the filtrate is large, it is preferable to perform the step h every time for suppressing the cake filtration resistance.

In the step h, as a method for filling the membrane primary side in the microfiltration membrane/ultrafiltration membrane module 9 with water, the flocculation water or raw water may be fed by opening the flocculation water feed valve 8 and bringing the flocculation water feed pump 7 into operation, or the membrane filtrate may be fed as the backwashing water by opening the backwashing valve 14 and bringing the backwashing pump 13 into operation. Moreover, although not shown in the figure, it is preferable to add an oxidizing agent to the flocculation water, raw water, or membrane filtrate (i.e., water for filling the membrane primary side in the microfiltration membrane/ultrafiltration membrane module 9 at air scrubbing) to be fed at this time since there is an effect of decomposing and removing organic matters accumulated on the membrane surfaces or in the membrane pores. In the conventional physical cleaning, since the flocculation flocks containing the powdered activated carbon in the microfiltration membrane/ultrafiltration membrane module 9 have been not sufficiently exfoliated from the membrane surfaces, almost all the oxidizing agent added to raw water or membrane filtrate has been consumed by the powdered activated carbon, before the organic matters accumulated on the membrane surfaces and in the membrane pores are decomposed and removed. On the other hand, in the invention, it is possible to utilize the oxidizing agent at the maximum.

The air scrubbing may be started in a state that the membrane primary side in the microfiltration membrane/ultrafiltration membrane module 9 is previously filled with water or may be performed while feeding water to the membrane primary side in the microfiltration membrane/ultrafiltration membrane module 9 (i.e., while feeding raw water into the microfiltration membrane/ultrafiltration membrane module 9 during the air scrubbing or performing backwashing). However, it is preferable to perform the air scrubbing while feeding water since the cleaning effect is enhanced.

Thereafter, the air scrubbing valve 18 is closed and also the air blower 17 is halted, whereby the air scrubbing is completed. Incidentally, in the case where, during the air scrubbing, the flocculation water or raw water is fed into the microfiltration membrane/ultrafiltration membrane module 9 or the backwashing is continued, the feed of the flocculation water or raw water or the backwashing is completed by closing the flocculation water feed valve 8 and also halting the flocculation water feed pump 7 or the backwashing pump 13 simultaneously with the completion of the air scrubbing, before the completion of the air scrubbing, or after the completion of the air scrubbing.

Then, by opening the discharging valve 19, water on the membrane primary side in the microfiltration membrane/ultrafiltration membrane module 9 is discharged outside the system, and fouling substances that have been exfoliated from the membrane surfaces and membrane pores and have floated in the microfiltration membrane/ultrafiltration membrane module 9 can be simultaneously discharged outside the system (step i).

After the completion of the water discharge in the step i, the discharging valve 19 is closed, the flocculation water feed valve 8 is opened, and the flocculation water feed pump 7 is brought into operation to perform water feed, whereby the membrane primary side of the microfiltration membrane/ultrafiltration membrane module 9 is fully filled with water.

Incidentally, in the case where the flocculation water feed valve 8, the air bent valve 10 and the air scrubbing valve 18 are opened and the flocculation water feed pump 7 and the air blower 17 are brought into operation to perform air scrubbing while feeding the flocculation water (which may be raw water) to the membrane primary side in the microfiltration membrane/ultrafiltration membrane module 9 in the step h, the fouling substances that have been exfoliated from the membrane surfaces and membrane pores and have floated in the microfiltration membrane/ultrafiltration membrane module 9 migrate to an upper part of the microfiltration membrane/ultrafiltration membrane module 9 and are discharged outside the system through the air bent valve 10 in some cases. Therefore, it is also possible to re-start the filtration step directly with closing the air scrubbing valve 18 and also halting the air blower 17 and closing the air bent valve 10 without performing the step i.

Also, in the case where the backwashing valve 14, the air bent valve 10, and the air scrubbing valve 18 are opened and the backwashing pump 13 and the air blower 17 are brought into operation to perform air scrubbing while feeding the backwashing water to the membrane primary side in the microfiltration membrane/ultrafiltration membrane module 9 in the step h, the fouling substances that have been exfoliated from the membrane surfaces and membrane pores and have floated in the microfiltration membrane/ultrafiltration membrane module 9 migrate to an upper part of the microfiltration membrane/ultrafiltration membrane module 9 and are discharged outside the system through the air bent valve 10 in some cases. Therefore, it is also possible to re-start the filtration step directly with closing the backwashing valve 14 and the air scrubbing valve 18 and also halting the backwashing pump 13 and the air blower 17, opening the flocculation water feed valve 8, bringing the flocculation water feed pump 7 into operation, and closing the air bent valve 10 without performing the step i.

Moreover, after the completion of the step h, the water on the membrane primary side in the microfiltration membrane/ultrafiltration membrane module 9 may be pushed out and may be discharged outside the system through the air bent valve 10 by opening the flocculation water feed valve 8 and bringing the flocculation water feed pump 7 into operation to feed the flocculation water or raw water in a state that the discharging valve 19 is closed without performing the step i. By the operation, with regard to the water on the membrane primary side in the microfiltration membrane/ultrafiltration membrane module 9, the water containing the fouling substances that have been exfoliated from the membrane surfaces and membrane pores and have floated in the microfiltration membrane/ultrafiltration membrane module 9 is replaced by newly fed flocculation water or raw water.

Thereafter, when the air bent valve 10 is closed and the filtrate valve 11 is opened, the microfiltration membrane/ultrafiltration membrane module 9 is returned to the filtration step and the water treatment can be continued by repeating the above steps.

The cleaning method of the invention may be performed every time after the completion of the filtration step or may be performed at times in combination with the other cleaning method. It is preferable to reuse the water of the membrane primary side discharged from the discharging valve 19 at the lower part of the microfiltration membrane/ultrafiltration membrane module 9 before performing backwashing as the flocculation water to be fed to the microfiltration membrane/ultrafiltration membrane module 9. The water discharged here is contaminated only a little since backwashing or air scrubbing is not performed beforehand and hence there is no trouble for the reuse as raw water for membrane filtration. Thereby, the water recovery ratio (filtrate quantity/raw water quantity) is improved and it becomes possible to reduce discharge water to be in vain to a large degree. Furthermore, by discharging water from the discharging valve 19, a part of the active carbon attached to the membrane surfaces can be removed. Since the active carbon removed on this occasion is active carbon added just before the completion of the filtration step, the active carbon still has adsorption ability. If it can be re-utilized, economical efficiency can be enhanced. For the reuse as flocculation water, it is sufficient to return the water to the flocculation reaction tank 6 or, in the case of performing a pre-treatment, to return it to a pre-stage of the pre-treatment, thereby using it again as raw water for membrane filtration.

In the invention, the particles having high hardness refers to particles harder than the separation membrane to be subjected to filtration or cleaning. As such particles having high hardness, there may be mentioned powdered activated carbon, metal powders, silt particles, sand, ceramic particles, and the like but, from the viewpoint of adsorption ability, powdered activated carbon is preferably adopted. Here, with regard to the judgment whether the particles having high hardness are harder than the separation membrane, hardness is measured by a measurement method in accordance with ISO 14577-1 (instrumentation indentation hardness) and judgment is performed with comparing measured hardness. As for a hollow separation membrane, the membrane is cut open and a flattened one is measured.

Raw materials of the powdered activated carbon may be any of woody ones such as coconut shell and sawdust and coal-based ones such as peat, lignite, and bituminous coal. Moreover, with regard to the particle diameter of the powdered activated carbon, smaller one is preferable since specific surface area increases and adsorption ability becomes high. However, it is necessary for the particle diameter to be larger than the pore size of the separation membrane of the microfiltration membrane/ultrafiltration membrane module 9 so that the active carbon does not mix into the membrane filtrate.

As the inorganic flocculant to be stored in the flocculant storing tank 3, polyaluminum chloride, polyaluminum sulfate, ferric chloride, polyferric sulfate, ferric sulfate, polysilica iron, and the like can be used.

The chelating agent to be stored in the chelating agent storing tank 15 is not particularly limited. Examples thereof include ethylenediamine tetraacetic acid (EDTA), trans-1,2-cyclohexanediamine tetraacetic acid (CyDTA), glycol ether diamine tetraacetic acid (GEDTA or EGTA), diethyletriamine pentaacetic acid (DTPA), nitrilotriacetic acid (NTA), polyacrylic acid, polystyrenesulfonic acid, maleic anhydride (co)polymers, ligninsulfonic acid, aminotrimethylenephosphonic acid, phosphobutanetricarboxylic acid, nitrilotriacetic acid, ethylenediamine tetraacetic acid, diethylenetriamine pentaacetic acid, oxalic acid, ascorbic acid, citric acid, malic acid, tartaric acid, succinic acid, gluconic acid, alanine, arginine, cystein, glutamic acid, theanine, malonic aid, salicylic acid, pyrophosphoric acid, tripolyphosphoric acid, tetrametaphosphoric acid, hexametaphosphoric acid, trimetaphosphoric acid, and/or sodium salts and potassium salts thereof. Particularly, in the case where safety against human body is highly required, such as beverage applications, it is preferable to use ascorbic acid, citric acid, malic acid, tartaric acid, succinic acid, gluconic acid, alanine, arginine, cystein, glutamic acid, and theanine.

The microfiltration membrane/ultrafiltration membrane module 9 may be external pressure type one or internal pressure type one but, from the viewpoint of convenience of the pre-treatment, the external pressure type one is preferable. Also, the membrane filtration system may be a dead-end filtration type module or a cross-flow filtration type module but, from the viewpoint of small energy consumption, the dead-end filtration type module is preferable. Furthermore, the module may be a pressurization type module or immersion type module but, in view of capability of high flux, the pressurization type module is preferable.

The separation membrane to be used in the microfiltration membrane/ultrafiltration membrane module 9 is not particularly limited so long as it is porous but, depending on the water quality and water quantity of the desired treated water, a microfiltration membrane is used, an ultrafiltration membrane is used, or both membranes are used in combination. For example, in the case where turbidity components, *Escherichia coli, Cryptosporidium,* and the like are intended to remove, either of the microfiltration membrane and the ultrafiltration membrane may be used but, in the case where virus, polymeric organic matters, and the like are also intended to remove, it is preferable to use the ultrafiltration membrane.

The shape of the separation membrane includes hollow fiber membranes, flat membranes, tubular membranes, and the like and any of them may be used.

As the material of the separation membrane, it is preferable to contain at least one kind selected from the group consisting of polyethylene, polypropylene, polyacrylonitrile, ethylene-tetrafluoroethylene copolymer, polychlorotrifluoroethylene, polytetrafluoroethylene, polyvinyl fluoride, tetrafluoroethylene-hexafluoropropylene copolymer, tetrafluoroethylene-perfluoroalkyl vinyl ether copolymer, and chlorotrifluoroethylene-ethylene copolymer, polyvinylidene fluoride, polysulfone, cellulose acetate, polyvinyl alcohol, polyether sulfone, and the like. Further, in view of membrane strength and chemical resistance, polyvinylidene fluoride (PVDF) is more preferable and, in view of high hydrophilicity and strong fouling resistance, polyacrylonitrile is more preferable. Incidentally, since the separation membranes made of the aforementioned organic polymer resins have hardness lower than that of the particles having high hardness according to the invention, such as powdered activated carbon, the membranes can be preferably used in the method for cleaning a microfiltration membrane/ultrafiltration membrane module 9 of the invention.

The control method of filtration operation may be constant flow rate filtration or constant pressure filtration but, in view of obtaining a constant quantity of treated water and from the viewpoint of easiness in total control, the constant flow rate filtration is preferable.

According to the invention as mentioned above, the flocculation flocks are easily foliated from the membrane surfaces at the time of backwashing and also the flocculation flocks are destroyed through the reaction of the chelating agent with the inorganic flocculant to form a chelate complex without raising the flux of backwashing or increasing the water quantity of backwashing by extending the backwashing time. Therefore, the exfoliated flocculation flocks are easily discharged outside the system without remaining at the void parts of the membrane primary side in the microfiltration membrane/ultrafiltration membrane module 9 and also the abrasion of the membrane surfaces by the particles having high hardness at the time of air scrubbing can be efficiently reduced. Furthermore, at the time of the subsequent filtration step, the cake filtration resistance derived from the flocculation flocks containing the particles having high hardness on the membrane surfaces is suppressed and stable operation under a low transmembrane pressure is enabled for a long period of time. However, it is difficult to completely remove the flocculation flocks and thus aluminum and iron derived from the inorganic flocculant is attached or iron, manganese, and the like oxidized by the oxidizing agent gradually precipitate on the membrane surfaces in some cases. Therefore, in the case where the transmembrane pressure reaches near to pressure limit of the microfiltration membrane/ultrafiltration membrane module 9, it is preferable to perform chemical cleaning at high concentration.

The chemical for use in the cleaning can be selected after appropriately setting the concentration and retention time at which the membrane is not degraded but it is preferable to contain at least one of sodium hypochlorite, chlorine dioxide, hydrogen peroxide, ozone, and the like since a cleaning effect on organic matters becomes high. In addition, it is preferable to contain at least one of hydrochloric acid, sulfuric acid, nitric acid, citric acid, oxalic acid, and the like since a cleaning effect on aluminum, iron, manganese, and the like becomes high.

EXAMPLES

<Measurement Method of Hardness of Separation Membrane and Powdered activated carbon>

Since the separation membrane was hollow one, the membrane was cut open and processed into a flat membrane. The powdered activated carbon was embedded with a resin and was cut so that a cross-section appeared, whereby powdered activated carbon processed into a plane was obtained. Thereafter, hardness of each sample was measured by the nano indentation method (continuous rigidity measurement method) using an ultra micro hardness tester. Nano Indenter XP manufactured by MTS Systems was used as the ultra micro hardness tester and a regular triangular pyramid made of diamond was used as an indenter.

<Calculation Method of Transmembrane Pressure>

A pressure gauge was provided on a raw water feed pipe (membrane primary side) and a membrane filtrate pipe (membrane secondary side) connecting to the microfiltration membrane/ultrafiltration membrane module 9 and the transmembrane pressure was calculated by subtracting the pressure of the membrane secondary side from the pressure of the membrane primary side.

<Restoration Ratio by Chemical Cleaning>

Pure water permeation performance ($m^3$/h, at 50 kPa, 25°C) before the operation of the microfiltration membrane/ultrafiltration membrane module 9 (at the time of a new article) and after chemical cleaning thereof is measured. When the pure water permeation performance at the time of a new article was taken as A and the pure water permeation performance after chemical cleaning was taken as B, the restoration ratio (%) was calculated from a mathematical formula of $100 \times B/A$.

Incidentally, the pure water permeation performance was calculated according to the following formula after transmembrane pressure C (kPa) was measured when pure water at a water temperature of 25°C was membrane-filtered at a filtration flow rate of 6 $m^3$/h.

$$\text{Pure water permeation performance (m}^3\text{/h, at 50 kPa, 25°C)} = 6 \times 50/C$$

<Dry Sludge Accumulation in Separation Membrane Module>

After the microfiltration membrane/ultrafiltration membrane module 9 was taken into pieces, the membranes were placed into a water tank containing pure water and aeration was continued until no change in suspended solids concentration in the water tank had been observed, whereby the sludge on the membrane outer surfaces was washed off. After the sludge washed off from the membrane outer surfaces was dried and water content was completely evaporated, weight thereof was measured.

<Evaluation Method of Surface State of Separation Membrane>

After the microfiltration membrane/ultrafiltration membrane module 9 was taken into pieces, the membranes were placed into a water tank containing pure water and aeration was continued until no change in suspended solids concentration in the water tank had been observed, whereby the sludge on the membrane outer surfaces was washed off. After the membranes were dried, the membrane outer surfaces were observed using an electron microscope at 10,000 magnifications.

(Example 1)

In an apparatus shown in Fig. 1 using one module of an external pressure type PVDF ultrafiltration hollow fiber membrane module HFU-2020 (manufactured by Toray Industries, Inc.), river water in which addition concentration of powdered activated carbon had been adjusted to 50 mg/L and addition concentration of polyaluminum chloride had been adjusted to 1 mg-Al/L in a flocculation reaction tank 6 was subjected to constant flow rate filtration at a membrane filtration flux of 1.5 $m^3$/($m^2$ ·d) by opening the flocculation water feed valve 8 and the filtrate valve 11 and bringing the slurry feed pump 2, the flocculant feed pump 4, the stirrer 5, and the flocculation water feed pump 7 into operation. Here, hardness of the hollow fiber membrane was 0.019 GPa and hardness of the powdered activated carbon was 2.3 GPa.

After 30 minutes from the start of the constant flow rate filtration, the flocculation water feed valve 8 and the filtrate valve 11 were closed and the flocculation water feed pump 7 was halted and then the air bent valve 10 and the discharging valve 19 were opened, whereby the whole quantity of the water on the membrane primary side in the microfiltration membrane/ultrafiltration membrane module 9 was discharged (step a). Thereafter, the discharging valve 19 was closed and the chelating agent feed pump 16 was brought into operation to fill the membrane primary side in the microfiltration membrane/ultrafiltration membrane module 9 with a 1% aqueous citric acid solution (pH 2.3), and then the chelating agent feed pump 16 was halted, followed by settlement for 30 minutes (step b). Thereafter, the discharging valve 19 was opened and the whole quantity of the aqueous citric acid solution on the membrane primary side in the microfiltration membrane/ultrafiltration membrane module 9 was discharged (step c). Subsequently, while the air bent valve 10 and the discharging valve 19 were still opened, the backwashing valve 14 was opened and the backwashing pump 13 was brought into operation, whereby backwashing at a flux of 2 $m^3/(m^2 \cdot d)$ was performed for 30 seconds (step d). Thereafter, the backwashing valve 14 and the discharging valve 19 were closed, the backwashing pump 13 was halted and simultaneously the flocculation water feed valve 8 was opened, the flocculation water feed pump 7 was brought into operation to fill the membrane primary side in the microfiltration membrane/ultrafiltration membrane module 9 with flocculation water, then the flocculation water feed valve 8 was closed, the flocculation water feed pump 7 was halted and simultaneously the air scrubbing valve 18 was opened, and the air blower 17 was brought into operation, whereby air scrubbing at an air flow rate of 100 L/min was performed for 30 minutes (step h). Subsequently, the air scrubbing valve 18 was closed, the air blower 17 was halted and simultaneously the discharging valve 19 was opened, whereby the whole quantity of the water on the membrane primary side in the microfiltration membrane/ultrafiltration membrane module 9 was discharged (step i). Thereafter, the discharging valve 19 was closed and simultaneously the flocculation water feed valve 8 was opened and the flocculation water feed pump 7 was brought into operation to fill the membrane primary side in the microfiltration membrane/ultrafiltration membrane module 9 with the flocculation water, and then the filtrate valve 11 was opened and the air bent valve 10 was closed. Thus, the operation was returned to the filtration step. And the above steps were repeated.

As a result, the transmembrane pressure of the microfiltration membrane/ultrafiltration membrane module 9 was still 34 kPa after 6 months versus 15 kPa just after the operation start, so that stable operation could be performed. Moreover, as a result of performing chemical cleaning with a 0.3% aqueous sodium hypochlorite solution and a 3% aqueous citric acid solution after the operation for 6 months, the pure water permeation performance of the microfiltration membrane/ultrafiltration membrane module 9 was restored to 95% as compared with the time of the new article. When the microfiltration membrane/ultrafiltration membrane module 9 was taken into pieces, only 1.1 kg of dry sludge was accumulated in the microfiltration membrane/ultrafiltration membrane module 9. When the membrane outer surface was observed on an electron microscope, 90% or more of the membrane outer surface was smooth and an abraded state was hardly observed.

(Example 2)

This example was performed in the same manner as Example 1 except that the chelating agent feed pump 16 was brought into operation to fill the membrane primary side in the microfiltration membrane/ultrafiltration membrane module 9 with a 0.1% aqueous citric acid solution whose pH had been adjusted to 5 with sodium hydroxide and then the chelating agent feed pump 16 was halted, followed by settlement for 10 minutes in the step b.

As a result, the transmembrane pressure of the microfiltration membrane/ultrafiltration membrane module 9 was still 31 kPa after 6 months versus 15 kPa just after the operation start, so that stable operation could be performed. Moreover, as a result of performing chemical cleaning with a 0.3% aqueous sodium hypochlorite solution and a 3% aqueous citric acid solution after the operation for 6 months, the pure water permeation performance of the microfiltration membrane/ultrafiltration membrane module 9 was restored to 96% as compared with the time of the new article. When the micro filtration membrane/ultrafiltration membrane module 9 was taken into pieces, only 0.9 kg of dry sludge was accumulated in the microfiltration membrane/ultrafiltration membrane module 9. When the membrane outer surface was observed on an electron microscope, 90% or more of the membrane outer surface was smooth and an abraded state was hardly observed.

(Example 3)

This example was performed in the same manner as Example 1 except that the chelating agent feed pump 16 was brought into operation to fill the membrane primary side in the microfiltration membrane/ultrafiltration membrane module 9 with a 0.1% aqueous citric acid solution whose pH had been adjusted to 7 with sodium hydroxide and then the chelating agent feed pump 16 was halted, followed by settlement for 10 minutes in the step b.

As a result, the transmembrane pressure of the microfiltration membrane/ultrafiltration membrane module 9 was still 29 kPa after 6 months versus 15 kPa just after the operation start, so that stable operation could be performed. Moreover, as a result of performing chemical cleaning with a 0.3% aqueous sodium hypochlorite solution and a 3% aqueous citric acid solution after the operation for 6 months, the pure water permeation performance of the microfiltration membrane/ultrafiltration membrane module 9 was restored to 97% as compared with the time of the new article. When the microfiltration membrane/ultrafiltration membrane module 9 was taken into pieces, only 0.7 kg of dry sludge was accumulated in the microfiltration membrane/ultrafiltration membrane module 9. When the membrane outer surface was observed on an electron microscope, 90% or more of the membrane outer surface was smooth and an abraded state was hardly observed.

(Example 4)

In an apparatus shown in Fig. 1 using one module of an external pressure type PVDF ultrafiltration hollow fiber membrane module HFU-2020 (manufactured by Toray Industries, Inc.), river water in which addition concentration of powdered activated carbon had been adjusted to 50 mg/L and addition concentration of polyaluminum chloride had been adjusted to 1 mg-Al/L in a flocculation reaction tank 6 was subjected to constant flow rate filtration at a membrane filtration flux of 1.5 m$^3$/(m$^2$ ·d) by opening the flocculation water feed valve 8 and the filtrate valve 11 and bringing the slurry feed pump 2, the flocculant feed pump 4, the stirrer 5, and the flocculation water feed pump 7 into operation. Here, hardness of the hollow fiber membrane was 0.019 GPa and hardness of the powdered activated carbon was 2.3 GPa.
After 29 minutes from the start of the constant flow rate filtration, the flocculation water feed pump 7 was halted and simultaneously the chelating agent feed pump 16 was brought into operation to subject a 0.1% aqueous citric acid solution whose pH had been adjusted to 7 with sodium hydroxide to constant flow rate filtration at a membrane filtration flux of 1.5 m$^3$/(m$^2$·d) for 1 minute (step e). Thereafter, the flocculation water feed valve 8 and the filtrate valve 11 were closed and the chelating agent feed pump 16 was halted. After settlement for 10 minutes, the air bent valve 10 and the discharging valve 19 were opened and the whole quantity of the water containing the aqueous citric acid solution on the membrane primary side in the microfiltration membrane/ultrafiltration membrane module 9 was discharged (step f). Subsequently, while the air bent valve 10 and the discharging valve 19 were still opened, the backwashing valve 14 was opened and the backwashing pump 13 was brought into operation, whereby backwashing at a flux of 2 m$^3$/(m$^2$·d) was performed for 30 seconds (step d). Thereafter, the backwashing valve 14 and the discharging valve 19 were closed, the backwashing pump 13 was halted and simultaneously the flocculation water feed valve 8 was opened, the flocculation water feed pump 7 was brought into operation to fill the membrane primary side in the microfiltration membrane/ultrafiltration membrane module 9 with flocculation water, then the flocculation water feed valve 8 was closed, the flocculation water feed pump 7 was halted and simultaneously the air scrubbing valve 18 was opened, and the air blower 17 was brought into operation, whereby air scrubbing at an air flow rate of 100 L/min was performed for 30 minutes (step h). Subsequently, the air scrubbing valve 18 was closed, the air blower 17 was halted and simultaneously the discharging valve 19 was opened, whereby the whole quantity of the water on the membrane primary side in the microfiltration membrane/ultrafiltration membrane module 9 was discharged (step i). Thereafter, the discharging valve 19 was closed and simultaneously the flocculation water feed valve 8 was opened and the flocculation water feed pump 7 was brought into operation to fill the membrane primary side in the microfiltration membrane/ultrafiltration membrane module 9 with the flocculation water, and then the filtrate valve 11 was opened and the air bent valve 10 was closed. Thus, the operation was returned to the filtration step. And the above steps were repeated.
As a result, the transmembrane pressure of the microfiltration membrane/ultrafiltration membrane module 9 was still 27 kPa after 6 months versus 15 kPa just after the operation start, so that stable operation could be performed. Moreover, as a result of performing chemical cleaning with a 0.3% aqueous sodium hypochlorite solution and a 3% aqueous citric acid solution after the operation for 6 months, the pure water permeation performance of the microfiltration membrane/ultrafiltration membrane module 9 was restored to 97% as compared with the time of the new article. When the microfiltration membrane/ultrafiltration membrane module 9 was taken into pieces, only 0.6 kg of dry sludge was accumulated in the microfiltration membrane/ultrafiltration membrane module 9. When the membrane outer surface was observed on an electron microscope, 90% or more of the membrane outer surface was smooth and an abraded state was hardly observed.

(Example 5)

In an apparatus shown in Fig. 1 using one module of an external pressure type PVDF ultrafiltration hollow fiber membrane module HFU-2020 (manufactured by Toray Industries, Inc.), river water in which addition concentration of powdered activated carbon had been adjusted to 50 mg/L and addition concentration of polyaluminum chloride had been adjusted to 1 mg-Al/L in a flocculation reaction tank 6 was subjected to constant flow rate filtration at a membrane filtration flux of 1.5 m$^3$/(m$^2$ ·d) by opening the flocculation water feed valve 8 and the filtrate valve 11 and bringing the slurry feed pump 2, the flocculant feed pump 4, the stirrer 5, and the flocculation water feed pump 7 into operation. Here, hardness of the hollow fiber membrane was 0.019 GPa and hardness of the powdered activated carbon was 2.3 GPa.
After 30 minutes from the start of the constant flow rate filtration, the flocculation water feed valve 8 and the filtrate valve 11 were closed and the flocculation water feed pump 7 was halted and then the air bent valve 10 and the discharging valve 19 were opened, whereby the whole quantity of the water on the membrane primary side in the microfiltration membrane/ultrafiltration membrane module 9 was discharged (step a). Thereafter, while the air bent valve 10 and the discharging valve 19 were still opened, the backwashing valve 14 was opened and the chelating agent feed pump 16' was brought into operation, whereby backwashing with a 1% aqueous citric acid solution whose pH had been adjusted to 7 with sodium hydroxide was performed at a flux of 2 m$^3$/(m$^2$·d) for 30 seconds (step g). Subsequently, the backwashing valve 14 and the discharging valve 19 were closed, the chelating agent feed pump 16' was halted and simultaneously the flocculation water feed valve 8 was opened, the flocculation water feed pump 7 was brought into operation to fill the membrane primary side in the microfiltration membrane/ultrafiltration membrane module 9 with flocculation water, then the flocculation water feed valve 8 was closed, the flocculation water feed pump 7 was halted and simultaneously the air scrubbing valve 18 was opened, and the air blower 17 was brought into operation, whereby air scrubbing at an air flow rate of 100 L/min was performed for 30 minutes (step h). Thereafter, the air scrubbing valve 18 was closed, the air blower 17 was halted and simultaneously the discharging valve 19 was opened, whereby the whole quantity of the water on the membrane primary side in the microfiltration membrane/ultrafiltration membrane module 9 was discharged (step i). Subsequently, the discharging valve 19 was closed and simultaneously the flocculation water feed valve 8 was opened and the flocculation water feed pump 7 was brought into operation to fill the membrane primary side in the microfiltration membrane/ultrafiltration membrane module 9 with the flocculation water, and then the filtrate valve 11 was opened and the air bent valve 10 was closed. Thus, the operation was returned to the filtration step. And the above steps were repeated.

As a result, the transmembrane pressure of the microfiltration membrane/ultrafiltration membrane module 9 was still 41 kPa after 6 months versus 15 kPa just after the operation start, so that stable operation could be performed. Moreover, as a result of performing chemical cleaning with a 0.3% aqueous sodium hypochlorite solution and a 3% aqueous citric acid solution after the operation for 6 months, the pure water permeation performance of the microfiltration membrane/ultrafiltration membrane module 9 was restored to 89% as compared with the time of the new article. When the micro filtration membrane/ultrafiltration membrane module 9 was taken into pieces, only 1.3 kg of dry sludge was accumulated in the microfiltration membrane/ultrafiltration membrane module 9. When the membrane outer surface was observed on an electron microscope, 90% or more of the membrane outer surface was smooth and an abraded state was hardly observed.

(Comparative Example 1)

This example was performed in the same manner as Example 1 except that, after the step a in which, after 30 minutes from the start of the constant flow rate filtration, the flocculation water feed valve 8 and the filtrate valve 11 were closed and the flocculation water feed pump 7 was halted and then the air bent valve 10 and the discharging valve 19 were opened, whereby the whole quantity of the water on the membrane primary side in the microfiltration membrane/ultrafiltration membrane module 9 was discharged, there was performed a step d in which, while the air bent valve 10 and the discharging valve 19 were still opened, the backwashing valve 14 was opened and the backwashing pump 13 was brought into operation, whereby backwashing at a flux of 2 m$^3$/(m$^2$·d) was performed for 30 seconds, without performing the step b in which the discharging valve 19 was closed and the chelating agent feed pump 16 was brought into operation to fill the membrane primary side in the microfiltration membrane/ultrafiltration membrane module 9 with a 1% aqueous citric acid solution (pH 2.3), and then the chelating agent feed pump 16 was halted, followed by settlement for 30 minutes and the step c in which the discharging valve 19 was opened and the whole quantity of the aqueous citric acid solution on the membrane primary side in the microfiltration membrane/ultrafiltration membrane module 9 was discharged.

As a result, the transmembrane pressure of the microfiltration membrane/ultrafiltration membrane module 9 steeply rose to 120 kPa after 68 days versus 15 kPa just after the operation start. Moreover, as a result of performing chemical cleaning with a 0.3% aqueous sodium hypochlorite solution and a 3% aqueous citric acid solution just after that time, the pure water permeation performance of the microfiltration membrane/ultrafiltration membrane module 9 was only restored to 63% as compared with the time of the new article. When the microfiltration membrane/ultrafiltration membrane module 9 was taken into pieces, 6.1 kg of dry sludge was accumulated in the microfiltration membrane/ultrafiltration membrane module 9. When the membrane outer surface was observed on an electron microscope, it was confirmed that 40% of the membrane outer surface was smooth and remaining 60% was abraded.

(Comparative Example 2)

This example was performed in the same manner as Example 1 except that a step in which the membrane primary side in the microfiltration membrane/ultrafiltration membrane module 9 was filled with 0.01 mol/L hydrochloric acid, followed by settlement for 30 minutes was performed instead of performing the step b in which the membrane primary side in the microfiltration membrane/ultrafiltration membrane module 9 was filled with a 1% aqueous citric acid solution (pH 2.3), followed by settlement for 30 minutes, and the whole quantity of the hydrochloric acid on the membrane primary side in the microfiltration membrane/ultrafiltration membrane module 9 was discharged instead of the step c in which the whole quantity of the aqueous citric acid solution on the membrane primary side in the microfiltration membrane/ultrafiltration membrane module 9 was discharged.

As a result, the transmembrane pressure of the microfiltration membrane/ultrafiltration membrane module 9 steeply rose to 120 kPa after 87 days versus 15 kPa just after the operation start. Moreover, as a result of performing chemical cleaning with a 0.3% aqueous sodium hypochlorite solution and a 3% aqueous citric acid solution just after that time, the pure water permeation performance of the microfiltration membrane/ultrafiltration membrane module 9 was only restored to 68% as compared with the time of the new article. When the microfiltration membrane/ultrafiltration membrane module 9 was taken into pieces, 4.8 kg of dry sludge was accumulated in the microfiltration membrane/ultrafiltration membrane module 9. When the membrane outer surface was observed on an electron microscope, it was confirmed that 40% of the membrane outer surface was smooth and remaining 60% was abraded.

(Comparative Example 3)

This example was performed in the same manner as Example 4 except that a 0.01 mol/L hydrochloric acid was subjected to constant flow rate filtration at a membrane filtration flux of 1.5 $m^3/(m^2 \cdot d)$ for 1 minute instead of the step e in which a 0.1% aqueous citric acid solution whose pH had been adjusted to 7 with sodium hydroxide was subjected to constant flow rate filtration at a membrane filtration flux of 1.5 $m^3/(m^2 \cdot d)$ for 1 minute and, after settlement for 10 minutes after the constant flow rate filtration with hydrochloric acid for 1 minute, the whole quantity of the hydrochloric acid on the membrane primary side in the microfiltration membrane/ultrafiltration membrane module 9 was discharged instead of the step f in which, after settlement for 10 minute after the step e, the whole quantity of the aqueous citric acid solution on the membrane primary side in the microfiltration membrane/ultrafiltration membrane module 9 was discharged.

As a result, the transmembrane pressure of the microfiltration membrane/ultrafiltration membrane module 9 steeply rose to 120 kPa after 95 days versus 15 kPa just after the operation start. Moreover, as a result of performing chemical cleaning with a 0.3% aqueous sodium hypochlorite solution and a 3% aqueous citric acid solution just after that time, the pure water permeation performance of the microfiltration membrane/ultrafiltration membrane module 9 was only restored to 76% as compared with the time of the new article. When the microfiltration membrane/ultrafiltration membrane module 9 was taken into pieces, 3.9 kg of dry sludge was accumulated in the microfiltration membrane/ultrafiltration membrane module 9. When the membrane outer surface was observed on an electron microscope, it was confirmed that 50% of the membrane outer surface was smooth and remaining 50% was abraded.

(Comparative Example 4)

This example was performed in the same manner as Example 5 except that backwashing at a flux of 2 $m^3/(m^2 \cdot d)$ with 0.01 mol/L hydrochloric acid was performed for 30 seconds instead of the step g in which backwashing at a flux of 2 $m^3/(m^2 \cdot d)$ with a 1% aqueous citric acid solution whose pH had been adjusted to 7 with sodium hydroxide was performed for 30 seconds.

As a result, the transmembrane pressure of the microfiltration membrane/ultrafiltration membrane module 9 steeply rose to 120 kPa after 74 days versus 15 kPa just after the operation start. Moreover, as a result of performing chemical cleaning with a 0.3% aqueous sodium hypochlorite solution and a 3% aqueous citric acid solution just after that time, the pure water permeation performance of the microfiltration membrane/ultrafiltration membrane module 9 was only restored to 65% as compared with the time of the new article. When the microfiltration membrane/ultrafiltration membrane module 9 was taken into pieces, 5.4 kg of dry sludge was accumulated in the microfiltration membrane/ultrafiltration membrane module 9. When the membrane outer surface was observed on an electron microscope, it was confirmed that 40% of the membrane outer surface was smooth and remaining 60% was abraded.

Here, conditions and evaluation results of individual Examples and Comparative Examples are shown in Tables 1 and 2.

[Table 1]

|  | Step 1 |  |  | Step 2 | Step 3 | Step 4 | Step 5 | Step 6 | Step 7 | Step 8 |
|---|---|---|---|---|---|---|---|---|---|---|
| Example 1 | filtration for 30 minutes |  |  | water discharge (step a) | feed of 1% citric acid → settlement for 30 minutes (step b) | citric acid discharge (step c) | backwashing for 30 seconds + simultaneous water discharge (step d) | water feed → air scrubbing for 30 seconds (step h) | water discharge (step i) | water feed |
| Example 2 | Filtration for 30 minutes |  |  | water discharge (step a) | feed of 0.1% citric acid adjusted to pH 5 → settlement for 10 minutes (step b) | citric acid discharge (step c) | backwashing for 30 seconds + simultaneous water discharge (step d) | water feed → air scrubbing for 30 seconds (step h) | water discharge (step i) | water feed |
| Example 3 | filtration for 30 minutes |  |  | water discharge (step a) | feed of 0.1% citric acid adjusted to pH 7 → settlement for 10 minutes (step b) | citric acid discharge (step c) | backwashing for 30 seconds + simultaneous water discharge (step d) | water feed → air scrubbing for 30 seconds (step h) | water discharge (step i) | water feed |
| Example 4 | filtration for 29 minutes | filtration of 0.1% citric acid adjusted to pH 7 for 1 minute (step e) | settlement for 10 minutes → citric acid discharge (step f) |  |  |  | backwashing for 30 seconds + simultaneous water discharge (step d) | water feed → air scrubbing for 30 seconds (step h) | water discharge (step i) | water feed |
| Example 5 | filtration for 30 minutes |  |  | water discharge (step a) | backwashing with 1% citric acid adjusted to pH 7 for 30 seconds + simultaneous water discharge (step g) |  |  | water feed → air scrubbing for 30 seconds (step h) | water discharge (step i) | water feed |

(continued)

| | Step 1 | | | Step 2 | Step 3 | Step 4 | Step 5 | Step 6 | Step 7 | Step 8 |
|---|---|---|---|---|---|---|---|---|---|---|
| Comparative Example 1 | filtration for 30 minutes | | | water discharge (step a) | | | backwashing for 30 seconds + simultaneous water discharge (step d) | water feed → air scrubbing for 30 seconds (step h) | water discharge (step i) | water feed |
| Comparative Example 2 | filtration for 30 minutes | | | water discharge (step a) | feed of 0.01 mol/L hydrochloric acid → settlement for 30 minutes | hydrochloric acid discharge (step c) | backwashing for 30 seconds + simultaneous water discharge (step d) | water feed → air scrubbing for 30 seconds (step h) | water discharge (step i) | water feed |
| Comparative Example 3 | filtration for 29 minutes | filtration of 0.01 mol/L hydrochloric acid for 1 minute | settlement for 10 minutes → hydrochloric acid discharge | | | | backwashing for 30 seconds + simultaneous water discharge (step d) | water feed → air scrubbing for 30 seconds (step h) | water discharge (step i) | water feed |
| Comparative Example 4 | filtration for 30 minutes | | | water discharge (step a) | backwashing with 0.01 mol/L sulfuric acid for 30 seconds + simultaneous water discharge | | | water feed → air scrubbing for 30 seconds (step h) | water discharge (step i) | water feed |

[Table 2]

| | Just after start of operation | Transmembrane pressure after 6 months | Recovery ratio by chemical washing | Sludge accumulation |
|---|---|---|---|---|
| Example 1 | 15 kPa | 34 kPa | 95% | 1.1 kg |
| Example 2 | 15 kPa | 31 kPa | 96% | 0.9 kg |
| Example 3 | 15 kPa | 29 kPa | 97% | 0.7 kg |
| Example 4 | 15 kPa | 27 kPa | 97% | 0.6 kg |
| Example 5 | 15 kPa | 41 kPa | 89% | 1.3 kg |
| Comparative Example 1 | 15 kPa | 120 kPa (after 68 days) | 63% | 6.1 kg |
| Comparative Example 2 | 15 kPa | 120 kPa (after 87 days) | 68% | 4.8 kg |
| Comparative Example 3 | 15 kPa | 120 kPa (after 95 days) | 76% | 3.9 kg |
| Comparative Example 4 | 15 kPa | 120 kPa (after 74 days) | 65% | 5.4 kg |

DESCRIPTION OF REFERENCE NUMERALS AND SIGNS

1:       Active carbon slurry storing tank
2:       Slurry feed pump
3:       Flocculant storing tank
4:       Flocculant feed pump
5:       Stirrer
6:       Flocculation reaction tank
7:       Flocculation water feed pump
8:       Flocculation water feed valve
9:       Microfiltration membrane/Ultrafiltration membrane module
10:      Air vent valve
11:      Filtrate valve
12:      Filtrate storing tank
13:      Backwashing pump
14:      Backwashing valve
15, 15':  Chelating agent storing tank
16, 16':  Chelating agent feed pump
17:      Air blower
18:      Air scrubbing valve
19:      Discharging valve

**Claims**

1.  A method for cleaning a separation membrane module in which filtration is performed through a separation membrane after mixing and stirring raw water containing particles having hardness higher than that of the separation membrane with an inorganic flocculant, the method comprising:

    (a) discharging water on a membrane primary side in the separation membrane module outside the system after completion of the filtration;

    then (b) filling the membrane primary side in the separation membrane module with water containing a chelating agent for a certain period of time;
subsequently (c) discharging the water containing the chelating agent on the membrane primary side in the separation membrane module outside the system; and
then (d) discharging backwashing discharge water in the separation membrane module while performing backwashing in which backwashing water is transferred from a membrane secondary side to the membrane primary side of the separation membrane module.

2. A method for cleaning a separation membrane module in which filtration is performed through a separation membrane after mixing and stirring raw water containing particles having hardness higher than that of the separation membrane with an inorganic flocculant, the method comprising:

(e) injecting a chelating agent to a membrane primary side in the separation membrane module in the course of the filtration;

subsequently (f) discharging water containing the chelating agent in the separation membrane module outside the system after completion of the filtration; and
then (d) discharging backwashing discharge water in the separation membrane module while performing backwashing in which backwashing water is transferred from a membrane secondary side to the membrane primary side of the separation membrane module.

3. A method for cleaning a separation membrane module in which filtration is performed through a separation membrane after mixing and stirring raw water containing particles having hardness higher than that of the separation membrane with an inorganic flocculant, the method comprising:

(a) discharging water on a membrane primary side in the separation membrane module outside the system after completion of the filtration; and

then (g) discharging backwashing discharge water in the separation membrane module while performing backwashing in which water containing a chelating agent is transferred from a membrane secondary side to the membrane primary side of the separation membrane module.

4. The method for cleaning a separation membrane module according to any of claims 1 to 3, wherein, following any of the steps (d) and (g), (h) air scrubbing is performed while water is fed to the membrane primary side in the separation membrane module or after the membrane primary side in the separation membrane module is filled with water.

5. The method for cleaning a separation membrane module according to claim 4, wherein (i) the water on the membrane primary side in the separation membrane module is discharged outside the system after performing the air scrubbing.

6. The method for cleaning a separation membrane module according to claim 4 or 5, wherein the water to be fed to the membrane primary side in the separation membrane module in the step (h) is at least one of the backwashing water, the raw water and flocculation water obtained by mixing and stirring the raw water and the inorganic flocculant.

7. The method for cleaning a separation membrane module according to any of claims 1 to 6, wherein pH of the water containing the chelating agent in any of steps (b), (e) and (g) is 5 or more.

8. The method for cleaning a separation membrane module according to any of claims 1 to 7, wherein the water on the membrane primary side in the separation membrane module is discharged outside the system until a water level on the membrane primary side in the separation membrane module reaches one third or less of a length of the separation membrane, in at least one step of the steps (a), (c) and (f).

9. The method for cleaning a separation membrane module according to claim 8, wherein a whole quantity of the water on the membrane primary side in the separation membrane module is discharged in at least one step of the steps (a), (c) and (f).

10. The method for cleaning a separation membrane module according to any of claims 1 to 9, wherein a flow rate of the backwashing is controlled so that a water level on the membrane primary side in the separation membrane module is kept to be one third or less of a length of the separation membrane, in any of the steps (d) and (g).

*Fig. 1*

<table>
<tr><td colspan="2" align="center"><b>INTERNATIONAL SEARCH REPORT</b></td><td colspan="2">International application No.<br>PCT/JP2012/061850</td></tr>
</table>

| | |
|---|---|
| **A. CLASSIFICATION OF SUBJECT MATTER**<br>*B01D65/06*(2006.01)i, *B01D65/02*(2006.01)i, *C02F1/44*(2006.01)i, *C02F1/52*<br>(2006.01)i | |

According to International Patent Classification (IPC) or to both national classification and IPC

**B. FIELDS SEARCHED**

Minimum documentation searched (classification system followed by classification symbols)
B01D65/06, B01D65/02, C02F1/44, C02F1/52

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| P,A | WO 2011/122289 A1 (Toray Industries, Inc.),<br>06 October 2011 (06.10.2011),<br>claims 1, 2, 4, 6, 10; examples 1 to 6<br>(Family: none) | 1-10 |
| A | JP 11-57708 A (Mitsubishi Heavy Industries,<br>Ltd.),<br>02 March 1999 (02.03.1999),<br>claims 1 to 3; paragraphs [0011], [0012];<br>example 1<br>(Family: none) | 1-10 |
| A | JP 10-211490 A (NKK Corp.),<br>11 August 1998 (11.08.1998),<br>claim 1; examples 1, 2<br>(Family: none) | 1-10 |

| | | | |
|---|---|---|---|
| ☒ Further documents are listed in the continuation of Box C. | | ☐ See patent family annex. | |

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>07 August, 2012 (07.08.12) | Date of mailing of the international search report<br>21 August, 2012 (21.08.12) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/061850 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2010-502436 A  (Nalco Co.),<br>28 January 2010 (28.01.2010),<br>claims 1, 3; paragraph [0053]<br>& US 2008/0060997 A1     & EP 2059332 A1<br>& WO 2008/030652 A1     & KR 10-2009-0071583 A<br>& CN 101511451 A | 1-10 |
| A | JP 2009-274021 A  (Kuraray Co., Ltd.),<br>26 November 2009 (26.11.2009),<br>paragraph [0026]<br>(Family: none) | 1-10 |
| A | JP 2004-275865 A  (Asahi Kasei Clean Chemical<br>Co., Ltd.),<br>07 October 2004 (07.10.2004),<br>claims 1, 2, 6; paragraphs [0014], [0073]<br>(Family: none) | 1-10 |
| A | JP 2004-209478 A  (Ebara Corp.),<br>29 July 2004 (29.07.2004),<br>claim 1; paragraph [0020]<br>(Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10309567 A
- JP 11342320 A
- JP 2000140585 A
- JP 2007289940 A
- JP 2001187324 A
- JP 2001079366 A
- JP 6170364 A

**Non-patent literature cited in the description**

- Yuhzah notameno Jitsuyou Makubunri Gijutsu. The Nikkan Kogyo Shimbun, Ltd, April 1996, 85